# EUROPEAN PATENT SPECIFICATION

(11) **EP 3 163 187 B1**
(45) Date of publication and mention of the grant of the patent: **27.03.2019**
(21) Application number: 15799634.9
(22) Date of filing: 14.04.2015
(51) Int. Cl.: F24F 1/30, F24F 1/22, F25B 41/04, F24F 1/20, F25B 13/00, F16K 51/00, F24F 13/20

(54) **REFRIGERANT CHANNEL SWITCHING UNIT**
UMSCHALTEINHEIT FÜR KÄLTEMITTELKANAL
UNITÉ DE COMMUTATION DE CANAL DE RÉFRIGÉRANT

(30) Priority: 30.05.2014 JP 2014112975
(43) Date of publication of application: 03.05.2017
(73) Proprietor: Daikin Industries, Ltd., Osaka-shi, Osaka 530-8323 (JP)
(72) Inventor: KAMITANI, Shigeki, Osaka 530-8323 (JP); EGUCHI, Akihiro, Osaka 530-8323 (JP); KURITA, Daiki, Osaka 530-8323 (JP)
(74) Representative: Hoffmann Eitle
(86) International application number: PCT/JP2015/002069
(87) International publication number: WO 2015/182031

(56) References cited:
- JP-A- H0 821 643
- JP-A- H0 821 643
- JP-A- 2008 039 276
- JP-A- 2010 121 858
- JP-A- 2010 121 859
- JP-A- 2010 121 859
- JP-A- 2014 025 668
- JP-B2- 3 106 889
- JP-U- H 051 923
- JP-U- H0 331 232
- JP-U- H0 331 232
- JP-U- S5 813 469
- US-A1- 2011 219 799

## Description

### TECHNICAL FIELD

The present invention relates to a refrigerant channel switching unit which includes a unit case housing a channel switching valve for switching channels of a refrigerant in a refrigerant circuit of an air conditioner. The present invention particularly relates to a refrigerant channel switching unit including a unit case having a case body, and an electrical equipment box attached to the case body.

### BACKGROUND ART

A known refrigerant circuit of an air conditioner generally includes a channel switching valve which switches channels of a refrigerant by electric control (e.g., a motor-operated regulating valve or an electromagnetic on-off valve). For example, an air conditioner disclosed in JP2008039276 (A) includes an outdoor unit having a heat source-side heat exchanger, and a plurality of indoor units each having a utilization-side heat exchanger. Further, a refrigerant channel switching unit comprised of a plurality of channel switching valves housed in a unit case is connected between the outdoor unit and each indoor unit. The unit case includes, in general, a case body, and an electrical component box (a control box) housing electric components connected with wires to the channel switching valves, the electrical component box being attached to the case body.

The refrigerant channel switching unit is provided for a refrigerant circuit having an outdoor unit and a plurality of indoor units, and includes a unit case housing a refrigerant piping, and a plurality of refrigerant channel switching valves, such as electromagnetic valves and motor-operated valves, provided in the refrigerant piping. By switching the channel switching valves, the refrigerant channel switching unit is configured to switch the operation state between a state, where a refrigerant evaporated in the indoor units flows toward a compressor of the outdoor unit, and a state, where the refrigerant discharged from the compressor of the outdoor unit flows toward the indoor units. Thus, the air conditioner is configured to perform cooling and heating switchably on an indoor unit basis, i.e., on a utilization-side heat exchanger basis.

JP2014025668 (A) discloses a refrigerant circuit unit in which a body case and an electric component box can be positioned with a simple structure in a state of securing a prescribed interval therebetween, while complementing supporting strength of the body case when the large-scaled heavy electric component box is hooked on the body case and the electric component box is then positioned to the body case. The switching unit includes the body case and the electric component box. A hooking claw disposed on an outer face of the electric component box is hooked on a hooking portion disposed on an electric component box supporting portion as a front face portion of the body case. When portions extended longer than a prescribed interval of projecting portions disposed so as to project to an outer face side of the electric component box, are entirely fitted to recessed portions disposed on the electric component box arrangement portion as a front face portion of the body case, the projecting portions can be fixed to the recessed portions.

### SUMMARY OF THE INVENTION

### TECHNICAL PROBLEM

In general, maintenance of the channel switching valve is performed after electric wires (internal wires) connected to the channel switching valve and the electrical component box are detached, a cover of the electrical component box or casing is detached from a case body of the unit case, and these members thus detached are placed near the unit case so as not to get in the way of a maintenance worker.

However, the maintenance of the channel switching valve in the unit case after the electric wires and the cover of the electrical component box or casing have been detached requires a large number of process steps, which complicates the maintenance work. Thus, it is desirable to facilitate the maintenance.

In view of the foregoing, the present invention has been achieved. In a refrigerant channel switching unit comprising a unit case having a case body and an electrical component box attached to the case body, the unit case housing a channel switching valve, it is therefore an object of the present invention to facilitate the maintenance of the channel switching valve.

### SOLUTION TO THE PROBLEM

The present invention relates to a refrigerant channel switching unit as defined in claim 1, including: a channel switching valve (EV1, EV2, EV3) switching, by electric control, channels of a refrigerant in a refrigerant circuit (5) of an air conditioner (10); and a unit case (33) housing the channel switching valve (EV1, EV2, EV3), the unit case (33) including a case body (34) having one open face, and an electrical component box (35) being detachably attached to the one open face of the case body (34) and housing an electrical component (36) controlling the channel switching valve (EV1, EV2, EV3).

In the refrigerant channel switching unit, the electrical component box (35) is attachable to the case body (34) at a first position, where the electrical component box (35) blocks the one open face of the case body (34) entirely, and a second position, where a maintenance opening (39) is formed in a part of the one open face of the unit case (33), and the refrigerant channel switching unit further includes a fastener (53) for attaching the electrical component box (35) to the case body (34) at the first position, and a temporary retaining mechanism (54) for temporarily retaining the electrical component box (35) on the case body (34) at the second position. Further, the second position of the electrical component box (35) is below the first position, and the electrical component box (35) is provided with a wire holder (38) holding, at a position above the channel switching valve (EV1, EV2, EV3), an internal wire (16) connected to the electrical component (36) in the electrical component box (35) and the channel switching valve (EV1, EV2, EV3)

According to the first aspect, the electrical component box (35) attached to the case body (34) at the first position blocks the one open face of the case body (34) entirely. In this state, the channel switching valve (EV1, EV2, EV3) housed in the unit case (33) is covered completely by the unit case (33). On the other hand, when the electrical component box (35) is attached to the case body (34) at the second position, the maintenance opening (39) is formed in a part of the one open face of the unit case (33). Further, when the electrical component box (35) is moved from the first position to the second position below the first position, the wire holder (38) holding the internal wire (16) at an upper position also moves downward. As a result, the internal wire (16) has more slack than in the case where the electrical component box (35) is at the first position. Thus, the electrical component box (35) may be easily moved from the first to the second position, or from the second to first position, without detaching the internal wire (16) between the electrical component box (35) and the channel switching valve (EV1, EV2, EV3).

In a second aspect of the present disclosure which is an embodiment of the first aspect, the second position of the electrical component box (35) is below the first position, the channel switching valve (EV1, EV2, EV3) is a motor-operated regulating valve (EV1, EV2, EV3) or electromagnetic on-off valve having a coil (60), and the coil (60) is arranged in an upper portion in the unit case (33) to correspond to the maintenance opening (39) formed in an upper portion of the unit case (33) when the electrical component box (35) is temporarily retained on the case body (34) at the second position.

According to the second aspect, the electrical component box (35) is retained temporarily on the case body (34) at the second position below the first position, thereby forming the maintenance opening (39) in an upper portion of the unit case (33). Further, the coil (60) of the channel switching valve (EV1, EV2, EV3) is arranged in an upper region in the unit case (33) and positioned to correspond to the maintenance opening (39).

In a third aspect of the present disclosure which is an embodiment of the second aspect, the electrical component box (35) is provided with a wire holder (38) holding, at a position above the channel switching valve (EV1, EV2, EV3), an internal wire (16) connected to the electrical component (36) in the electrical component box (35) and the channel switching valve (EV1, EV2, EV3), and the internal wire (16) is held by the wire holder (38) such that a portion of the internal wire (16) between the channel switching valve (EV1, EV2, EV3) and the wire holder (38) has an actual length longer than a direct distance between the channel switching valve (EV1, EV2, EV3) and the wire holder (38), and is thus slack.

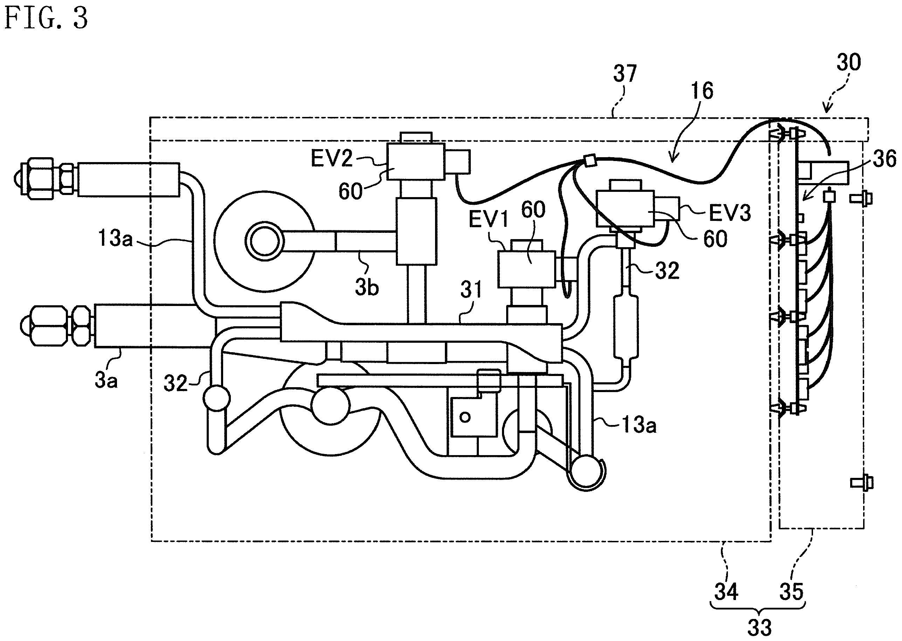

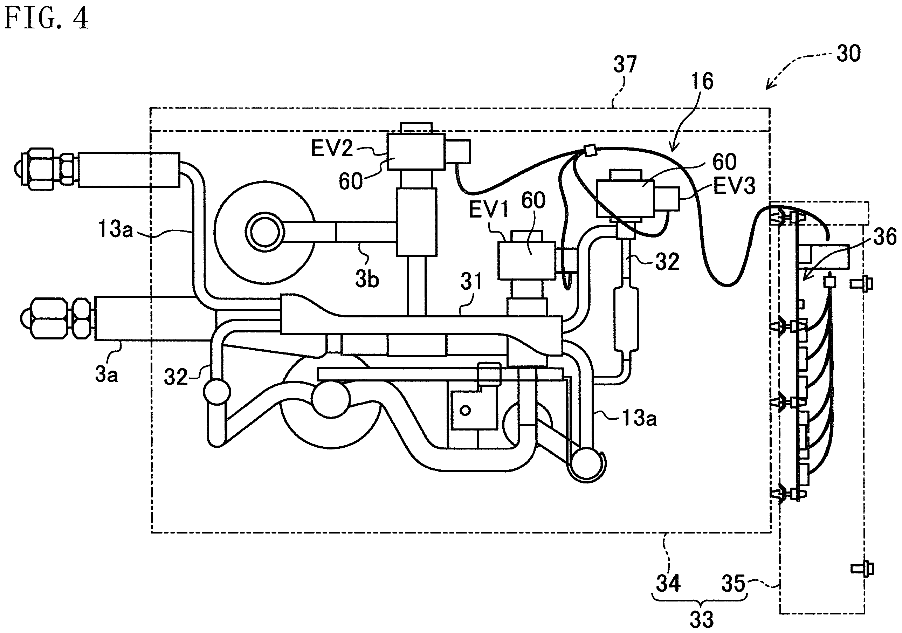

According to the third aspect, the internal wire (16) connected to the electrical component (36) in the electrical component box (35) and the channel switching valve (EV1, EV2, EV3) has a slack portion between the channel switching valve (EV1, EV2, EV3) and the wire holder (38) as shown in FIG. 3. Thus, when the electrical component box (35) is at the second position, the portion of the internal wire (16) is still loose as shown in FIG. 4. Therefore, the electrical component box (35) may be easily moved from the first to the second position, or from the second to first position, without detaching the internal wire (16) between the electrical component box (35) and the channel switching valve (EV1, EV2, EV3).

In a fourth aspect of the present disclosure which is an embodiment of any one of the first to third aspects, the temporary retaining mechanism (54) includes a hook (55) provided for the electrical component box (35), and a hole or notch (56) formed in a member (34a) forming the one open face of the unit case (33) to engage with the hook (55).

According to the fourth aspect, the hook (55) provided for the electrical component box (35) is hanged on, and engaged with, the hole or notch (56) formed in the member (34a) of the unit case (33). Thus, the electrical component box (35) may be temporarily retained on the unit case (33) at the second position.

In a fifth aspect of the present disclosure which is an embodiment of any one of the first to fourth aspects, the unit case (33) has a drain opening (57) formed in a bottom face of the case body (34), and a drain pan (58) detachably attached to the bottom face of the case body (34) and covering the drain opening (57) when attached to the case body (34).

If condensation occurs on the pipe provided in the channel switching unit, condensate water may drip down and accumulate in the unit case (33). As a countermeasure, the fifth aspect allows such condensate water to be easily disposed by detaching the drain pan (58) from the bottom face of the unit case (33).

In a sixth aspect of the present disclosure which is an embodiment of any one of the first to fifth aspects, the unit case (33) houses a plurality of channel switching valves (EV1, EV2, EV3), and the plurality of channel switching valves (EV1, EV2, EV3) is a plurality of refrigerant channel switching valves (EV1, EV2, EV3) of an air conditioner (10) including a refrigerant circuit (5) capable of performing a concurrent cooling/heating operation, i.e., concurrently performing a cooling operation with one or some of a plurality of indoor heat exchangers and a heating operation with one or some other indoor heat exchangers.

According to the sixth aspect, a maintenance opening (39) may be easily provided for a refrigerant channel switching unit by moving the electrical component box (35) of the unit case (33) to the second position, the refrigerant channel switching unit housing a plurality of channel switching valves (EV1, EV2, EV3) of an air conditioner (10) having a refrigerant circuit (5) capable of performing the concurrent cooling/heating operation.

### ADVANTAGES OF THE INVENTION

According to the first aspect of the present disclosure, the maintenance opening (39) is formed in a part of one face of the unit case (33) when the electrical component box (35) is attached to the case body (34) at the second position. Thus, a worker is able to maintain the channel switching valve (EV1, EV2, EV3) through the maintenance opening (39). Further, since the electrical component box (35) at the second position is temporarily retained on the case body (34) by the temporary retaining mechanism (54), there is no need to fasten the electrical component box (35) with a fastener (53) or any other member, and the electrical component box (35) may be positioned easily. In addition, the electrical component box (35) may be easily moved to the second position, where the maintenance opening (39) is formed, without having to remove the internal wire (16) connected to the channel switching valve (EV1, EV2, EV3) and the electrical component (36) because the electrical component box (35) does not have to be detached from the case body (34). Further, when the electrical component box (35) is moved from the first position to the second position below the first position, the wire holder (38) holding the internal wire (16) at an upper position also moves downward. As a result, the internal wire (16) has more slack than in the case where the electrical component box (35) is at the first position. Thus, the electrical component box (35) may be easily moved from the first to the second position, or from the second to the first position, without detaching the internal wire (16) between the electrical component box (35) (the electrical component (36)) and the channel switching valve (EV1, EV2, EV3). This may facilitate the maintenance.

According to the second aspect of the present disclosure, the electrical component box (35) is temporarily retained on the case body (34) at the second position below the first position. Thus, the maintenance opening (39) is formed in an upper portion of the unit case (33), and the position of the maintenance opening (39) corresponds to the level of the coil (60) of the channel switching valve (EV1, EV2, EV3) arranged in an upper portion in the unit case (33). This may facilitate the maintenance of the channel switching valve (EV1, EV2, EV3).

According to the third aspect of the present disclosure, the internal wire (16) connected to the electrical component (36) in the electrical component box (35) and the channel switching valve (EV1, EV2, EV3) has a slack portion between the channel switching valve (EV1, EV2, EV3) and the wire holder (38) as shown in FIG. 3. Thus, when the electrical component box (35) is at the second position, the portion of internal wire may be still loose as shown in FIG. 4. Therefore, the electrical component box (35) may be easily moved from the first to the second position, or from the second to first position, without detaching the internal wire (16) between the electrical component box (35) (the electrical component (36)) and the channel switching valve (EV1, EV2, EV3). This may facilitate the maintenance.

According to the fourth aspect of the present disclosure, the hook (55) provided for the electrical component box (35) may be hanged on, and engaged with, the hole or notch (56) formed in a member of the unit case (33). Thus, the electrical component box (35) may be easily retained temporarily on the unit case (33) at the second position. This may facilitate forming the maintenance opening (39) in the unit case (33), and the maintenance may be less complicated.

According to the fifth aspect of the present disclosure, condensate water may be easily disposed by removing the drain pan (58) from the bottom face of the unit case (33).

According to the sixth aspect of the present disclosure, the maintenance opening (39) may be easily formed in a refrigerant channel switching unit by moving the electrical component box (35) of the unit case (33) to the second position, the refrigerant channel switching unit housing a plurality of channel switching valves (EV1, EV2, EV3) of an air conditioner (10) having a refrigerant circuit (5) capable of performing a concurrent cooling/heating operation. This may facilitate the maintenance of the plurality of channel switching valves (EV1, EV2, EV3).

### BRIEF DESCRIPTION OF THE DRAWINGS

FIG. 1 is a system configuration diagram illustrating an air conditioner according to an embodiment of the present invention.
FIG. 2 is a refrigerant circuit diagram of the air conditioner shown in FIG. 1.
FIG. 3 is a first side view of a refrigerant channel switching unit with its outer shape shown in phantom line, and internal components shown in solid line.
FIG. 4 is a second side view of the refrigerant channel switching unit with its outer shape shown in phantom line, and internal components shown in solid line.
FIG. 5 is a perspective view illustrating the refrigerant channel switching unit.
FIG. 6 is a perspective view illustrating the refrigerant channel switching unit with its front plate detached.
FIG. 7 is a perspective view illustrating the refrigerant channel switching unit with its front and top plates detached.
FIG. 8 is a perspective view illustrating the refrigerant channel
   switching unit with its front and top plates detached, and an electrical component box at a temporarily retained position.
FIG. 9 is a perspective view illustrating the refrigerant channel switching unit as viewed from below.
FIG. 10 is a perspective view illustrating the refrigerant channel switching unit with its front plate detached, as viewed from below.
FIG. 11 is a perspective view illustrating the refrigerant channel switching unit with its front plate detached, and the electrical component box at a temporarily retained position, as viewed from below.
FIG. 12 is a perspective view illustrating a configuration of a temporary retaining mechanism for temporarily retaining the electrical component box on a case body of the refrigerant channel switching unit.
FIG. 13 is an operation diagram illustrating how a refrigerant flows in a refrigerant circuit during an overall cooling operation.
FIG. 14 is an operation diagram illustrating how the refrigerant flows in the refrigerant circuit during an overall heating operation.
FIG. 15 is an operation diagram illustrating how the refrigerant flows in the refrigerant circuit during a first concurrent cooling/heating operation.
FIG. 16 is an operation diagram illustrating how the refrigerant flows in the refrigerant circuit during a second concurrent cooling/heating operation.

### DESCRIPTION OF EMBODIMENTS

Embodiments of the present invention will be described in detail below with reference to the drawings.

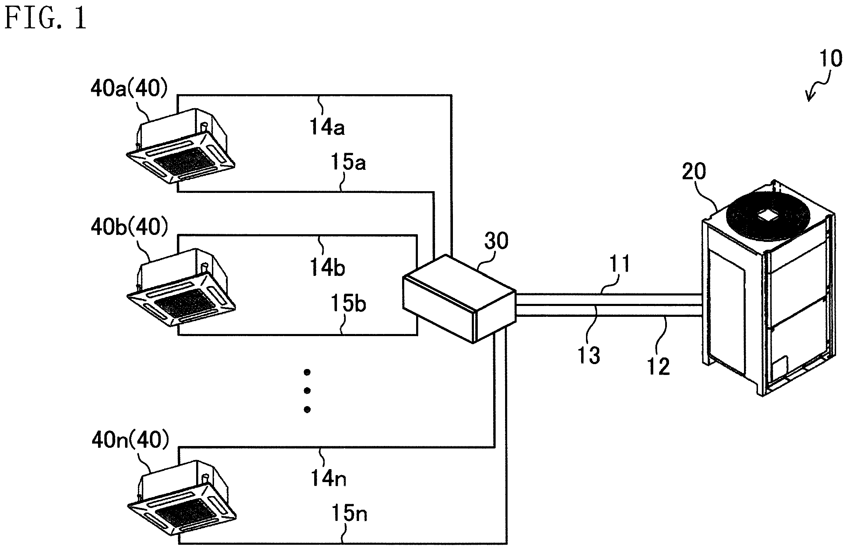

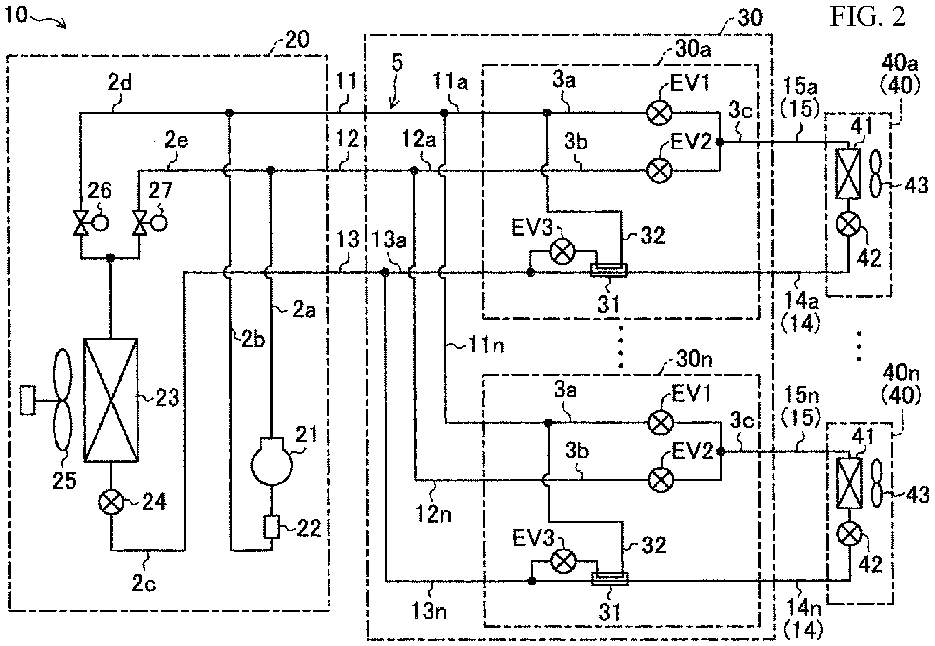

As shown in FIG. 1, an air conditioner (10) of a first embodiment is installed, for example, in a building, and is configured to cool or heat the inside of each room in the building. This air conditioner (10) includes an outdoor unit (20), a refrigerant channel switching unit (30), and a plurality of indoor units (40 (40a, ..., 40n)). Further, as shown in FIG. 2, the outdoor unit (20), the refrigerant channel switching unit (30), and the indoor units (40) are connected via refrigerant pipes (11-15) to form a refrigerant circuit (5). Note that FIG. 1 shows only three of n indoor units (40), while FIG. 2 shows only two. The refrigerant channel switching unit (30) is a hanging unit, and thus leaves empty space below when installed.

In the refrigerant circuit (5), a refrigerant circulates to perform a vapor compression refrigeration cycle, which allows a system including a plurality of indoor units (40a, ..., 40n) to perform an operation (concurrent cooling/heating operation) in which some of the indoor units perform cooling, while other indoor units perform heating. The refrigerant channel switching unit (30) has the same number n of switching circuits (30a, ..., 30n) and of indoor units (40a, ..., 40n).

The outdoor unit (20) constitutes a heat source-side unit of this embodiment. The outdoor unit (20) includes a principal pipe (2c), a first branch pipe (2d), and a second branch pipe (2e), which serve as refrigerant pipes. The outdoor unit (20) also includes a compressor (21), an outdoor heat exchanger (23) serving as a heat source-side heat exchanger, an outdoor expansion valve (24), and two electromagnetic valves (26, 27).

The principal pipe (2c) has one end connected to a liquid supply pipe (13) which is a communication pipe arranged outside the outdoor unit (20), and the other end connected to one end of the first branch pipe (2d) and one end of the second branch pipe (2e). The other end of the first branch pipe (2d) is connected to a low pressure gas supply pipe (11) which is a communication pipe arranged outside the outdoor unit (20). The other end of the second branch pipe (2e) is connected to a high/low pressure gas supply pipe (12) which is a communication pipe arranged outside the outdoor unit (20). The low pressure gas supply pipe (11), the high/low pressure gas supply pipe (12), and the liquid supply pipe (13) include low pressure gas supply pipe branches (11a, ..., 11n), high/low pressure gas supply pipe branches (12a, ..., 12n), and liquid supply pipe branches (13a, ..., 13n), respectively. Each pipe has a number of branches equal to the number n of channel switching circuits (30a, ..., 30n).

The compressor (21) is a fluid processing apparatus for compressing a refrigerant, and is comprised of, for example, a high pressure dome-shaped scroll compressor. The compressor (21) has a discharge pipe (2a) connected to some midpoint of the second branch pipe (2e), and a suction pipe (2b) connected to some midpoint of the first branch pipe (2d). The suction pipe (2b) is provided with an accumulator (22).

The outdoor heat exchanger (23) is a cross-fin type fin-and-tube heat exchanger, and is provided at some midpoint of the principal pipe (2c). An outdoor fan (25) is arranged near the outdoor heat exchanger (23), and is configured such that the air taken in through the outdoor fan (25) and a refrigerant exchange heat in the outdoor heat exchanger (23). The outdoor expansion valve (24) is comprised of an electronic expansion valve, and is provided for the principal pipe (2c) to be closer to the liquid supply pipe (13) than to the outdoor heat exchanger (23).

The two electromagnetic valves (26, 27) are a first electromagnetic valve (26) and a second electromagnetic valve (27). The first electromagnetic valve (26) is provided for the first branch pipe (2d) to be closer to the outdoor heat exchanger (23) than to the junction between the first branch pipe (2d) and the suction pipe (2b). The second electromagnetic valve (27) is provided for the second branch pipe (2e) to be closer to the outdoor heat exchanger (23) than to the junction between the second branch pipe (2e) and the discharge pipe (2a). These electromagnetic valves (26, 27) comprise a control valve which allows or blocks the flow of the refrigerant.

Each of the indoor units (40) constitutes a utilization-side unit according to this embodiment, and is connected to the refrigerant channel switching unit (30) via a liquid communication pipe (14) and a gas communication pipe (15). More particularly, a first indoor unit (40a) and a first refrigerant channel switching circuit (30a) are connected into a pair via a first liquid communication pipe (14a) and a first gas communication pipe (15a). That is, an n^{th} indoor unit (40n) and an n^{th} refrigerant channel switching circuit (30n) are connected in a pair via an n^{th} liquid communication pipe (14n) and an n^{th} gas communication pipe (15n).

Each of the indoor units (40a, ..., 40n) includes an indoor heat exchanger (41) and an indoor expansion valve (42) connected to each other via a refrigerant pipe. Each of the indoor heat exchangers (41) functions as a utilization-side heat exchanger, and is connected to an associated one of the gas communication pipes (15a, ..., 15n). Each of the indoor expansion valves (42) is connected to an associated one of the liquid communication pipes (14a, ..., 14n).

Each of the indoor heat exchangers (41) is a cross fin-type fin-and-tube heat exchanger. An indoor fan (43) is arranged near the indoor heat exchanger (41), and is configured such that the air taken in through the indoor fan (43) and a refrigerant exchange heat in the indoor heat exchanger (41). The indoor expansion valve (42) is comprised of an electronic expansion valve.

Each of the refrigerant channel switching circuits (30a, ..., 30n) includes a principal pipe (3c), a first branch pipe (3a), and a second branch pipe (3b), all serving as refrigerant pipes, and has two motor-operated regulating valves (31, 32). The motor-operated regulating valves (31, 32) are configured to be motor-driven to have their degrees of opening adjustable, and function as channel switching valves which switch the channel of the refrigerant by electric control.

The principal pipe (3c) has one end connected to the gas communication pipe (15a, ..., 15n), and the other end connected to one end of the first branch pipe (3a) and one end of the second branch pipe (3b). In each of the refrigerant channel switching circuits (30a, ..., 30n), the other end of the first branch pipe (3a) is connected to the low pressure gas supply pipe branch (11a, ..., 11n), and the other end of the second branch pipe (3b) is connected to the high/low pressure gas supply pipe branch (12a, ..., 12n).

The motor-operated regulating valves (31, 32) are a first motor-operated regulating valve (31) and a second motor-operated regulating valve (32), which are provided for the first branch pipe (3a) and the second branch pipe (3b), respectively. These motor-operated regulating valves (31, 32) comprise control valves which allow or block the flow of the refrigerant in each of the refrigerant channel switching circuits (30a, ..., 30n). The on/off state of the motor-operated regulating valves (30a, ..., 30n) is switched to control the flow of the refrigerant, thereby switching the operation between cooling and heating in each of the indoor units (40a, ..., 40n). In their function as channel switching valves, the motor-operated regulating valves (30a, ..., 30n) may be replaced with electromagnetic on-off valves. However, the electromagnetic on-off valves are prone to generate noise due to the difference in refrigerant pressure during switching between the on and off states. Thus, the motor-operated regulating valves (30a, ..., 30n) are used advantageously in this embodiment.

Each of the refrigerant channel switching circuits (30a, ..., 30n) is provided with a supercooling heat exchanger (51) and a supercooling pipe (52) which comprise a supercooling circuit. The supercooling pipe (52) has one end connected to the liquid supply pipe branch (13a, ..., 13n), passes through the supercooling heat exchanger (51), and has the other end connected to the first branch pipe (3a) to be located between the first motor-operated regulating valve (31) and the junction between the first branch pipe (3a) and the low pressure gas supply pipe branch (11a, ..., 11n).

A third motor-operated regulating valve (53) is provided between an end of the supercooling pipe (52) and the supercooling heat exchanger (51). The degree of opening of the third motor-operated regulating valve (53) is adjusted to regulate the amount of the refrigerant flowing into the supercooling circuit.

A specific configuration for the refrigerant channel switching unit (30) including a plurality of refrigerant channel switching circuits (30a, ..., 30n) will be described below.

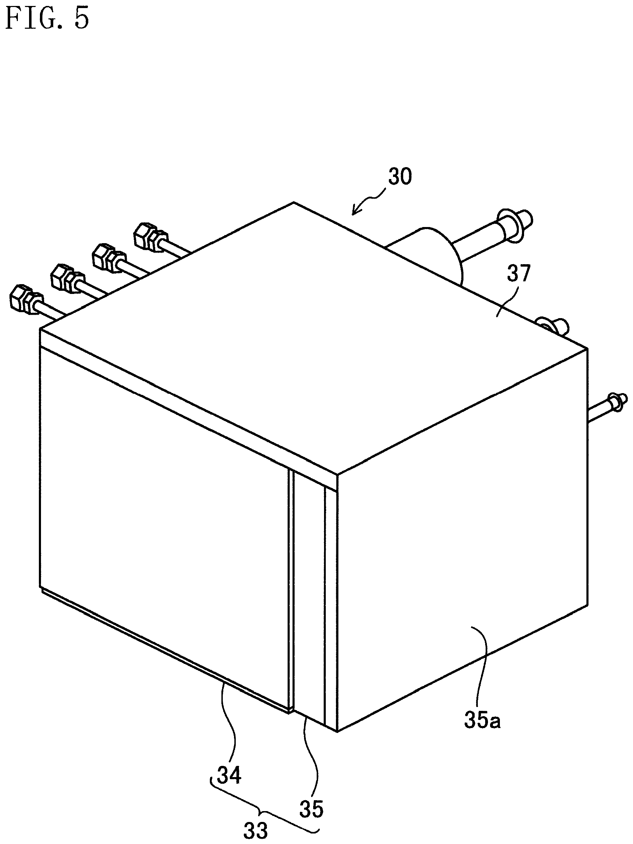

As shown in side view in FIGS. 3 and 4, in the refrigerant channel switching unit (30), components such as the pipes and motor-operated regulating valves (EV1, EV2, EV3), which are shown in solid line, are housed in a unit case (33), which is shown in phantom line. Further, as shown in FIGS. 5-8, components may be attached to, or detached from, the refrigerant channel switching unit (30).

The unit case (33) includes a rectangular parallelepiped case body (34) having one face open (a right face in the figures), and an electrical component box (35) detachably attached to the open face of the case body (34). The electrical component box (35) houses, as an electrical component controlling the operation of the motor-operated regulating valves, a printed wiring board (36) on which electronic parts are mounted. A top cover (37) is detachably mounted on a top face of the unit case (33) to cover both of the case body (34) and the electrical component box (35).

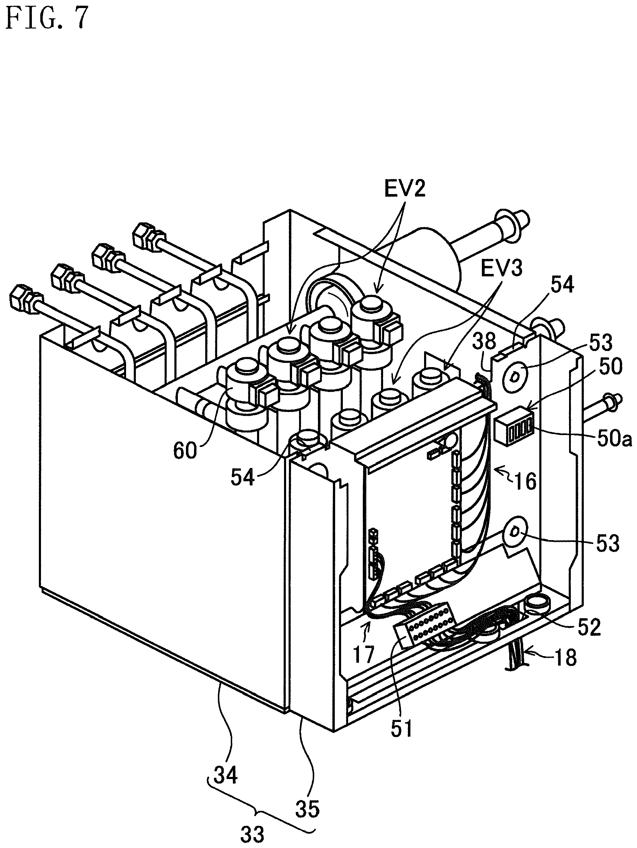

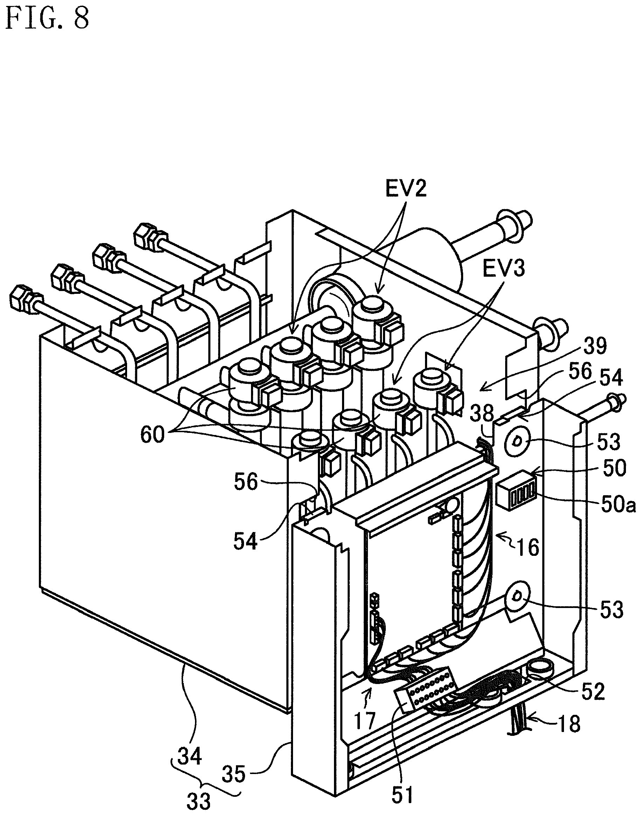

As shown in FIGS. 3 and 4, electric wires (internal wires) (16) are connected to the motor-operated regulating valves (EV1, EV2, EV3) and the printed wiring board (36). The electrical component box (35) is provided with a recess (wire holder) (38) (see FIGS. 7 and 8) holding the internal wires (16) connected to the printed wiring board (36) in the electrical component box (35) and the motor-operated regulating valves (EV1, EV2, EV3) at a position above the motor-operated regulating valves (EV1, EV2, EV3). The internal wires (16) are held by the wire holder (38) such that a portion of the wires between the motor-operated regulating valves (EV1, EV2, EV3) and the wire holder (38) has an actual length longer than a direct distance between the motor-operated regulating valves (EV1, EV2, EV3) and the wire holder (38), and is thus slack.

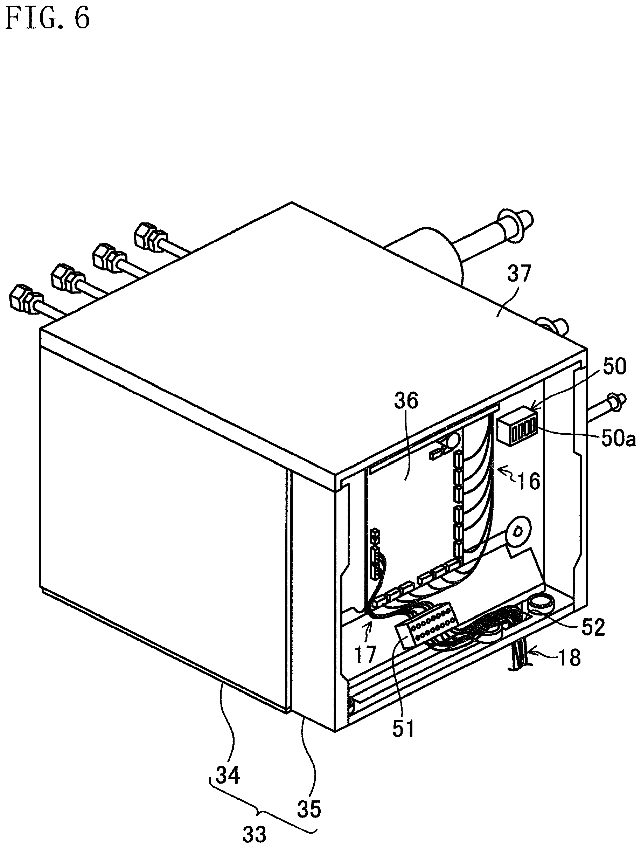

FIG. 5 shows an appearance of the refrigerant channel switching unit (30) in a fully assembled state. FIG. 6 is a perspective view illustrating the refrigerant channel switching unit from which a front plate (35) is detached to show the inside of the electrical component box (35). In the electrical component box (35), a DIP switch (50) is provided on a side of the printed wiring board (36). The DIP switch (50) is connected to the printed wiring board (37) via a wiring (not shown), and switches the operations performed by the indoor units (40) in accordance with the position of operating parts (50a). Further, FIG. 7 is a perspective view illustrating the refrigerant channel switching unit (30) from which the top cover (37) of the unit case (33) is detached. In this embodiment, the DIP switch (50) is arranged inside the unit case (33) to lower the risk of contact of the DIP switch (50) getting in contact with the outside and thus causing a malfunction. The illustrated position of the DIP switch (50) is merely an example, and the position may be changed as needed.

In this embodiment, the DIP switch (50) is used as an operation-enforcing switch which forces each indoor fan (43) (working component) provided for the indoor unit (40) to operate. A target to be operated by the DIP switch (50) does not have to be the indoor fan (43), and may be any mechanical part of a different working component provided for the indoor unit (40), such as a louver. For example, the indoor unit (40) may be provided with a light-emitting element to determine whether such a mechanical part is operated or not based on the blink of the light-emitting element. The switch which forces the target to operate may as well be a switch other than the DIP switch.

Further, as shown in FIGS. 6-8, the unit case (33) is provided with a terminal block (51), which is one of the electrical components, below the printed wiring board (36). The printed wiring board (36) and the terminal block (51) are connected via extension wires (17). The unit case (33) has a wire routing hole (52) formed near the terminal block (51). A plurality of lead wires (18) connected to the terminal block (51) is drawn in a bundled state through the wire routing hole (52).

As can be seen from the foregoing, the unit case (30) includes the electrical component box (35) detachably attached to the open face of the case body (34). The electrical component box (35) is attachable to the case body (34) at a first position, where the electrical component box (35) blocks the open face of the case body (34) entirely, as shown in FIGS. 3 and 7, and a second position, where a maintenance opening (39) is formed in a part of the open face of the unit case (33), as shown in FIGS. 4 and 8. The unit case (30) has a fastener (53) for attaching the electrical component box (35) to the case body (34) at the first position, and a temporary retaining mechanism (54) for retaining the electrical component box (35) temporarily on the case body (34) at the second position.

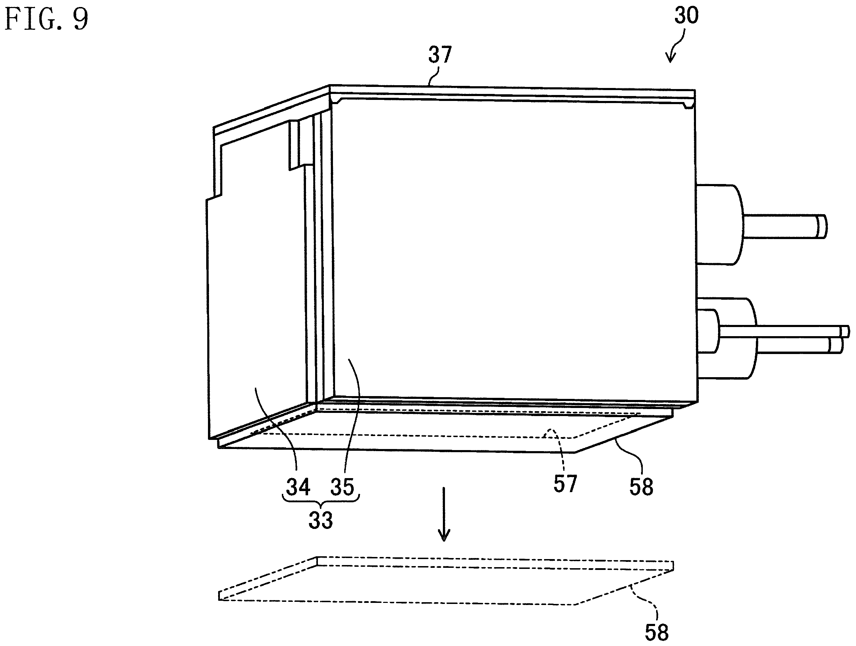

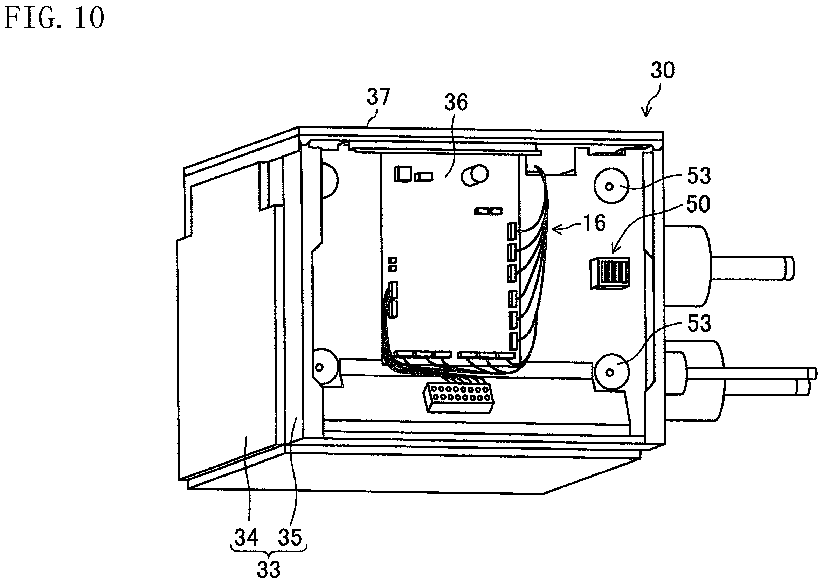

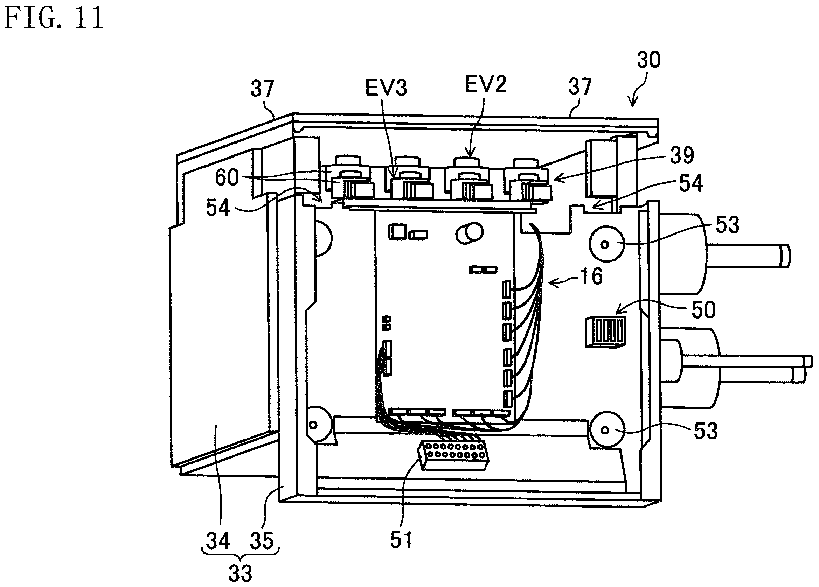

FIGS. 9-11 are perspective views illustrating the unit case (33) as viewed from a lower front side thereof. FIG. 9 is a perspective view illustrating the refrigerant channel switching unit (30) in a fully assembled state, FIG. 10 is a perspective view of the refrigerant channel switching unit (30) with the front plate (35a) detached, and FIG. 11 is a perspective view of the refrigerant channel switching unit (30) with the electrical component box (35) at a temporarily retained position. FIG. 11 shows the top cover (37) attached to the unit case (33) to show clearly that the maintenance opening (39) is formed when the electrical component box (35) is at the second position.

The second position of the electrical component box (35) is below the first position, and the maintenance opening (39) is formed in an upper portion of the unit case (33) when the electrical component box (35) is at the second position. Coils (60) provided for the motor-operated regulating valves (EV1, EV2, EV3) are arranged in an upper portion in the unit case (33) to correspond to the maintenance opening (39). With this configuration, the motor-operated regulating valves (EV1, EV2, EV3) may be maintained with the electrical component box (35) kept attached to the unit case (33).

The refrigerant channel switching unit according to this embodiment houses four refrigerant channel switching circuits (30a, ..., 30n). Thus, four sets (rows) of three motor-operated regulating valves (EV1, EV2, EV3) are provided as shown in FIGS. 7, 8, 11, and other drawings, each set of three motor-operated regulating valves (EV1, EV2, EV3) being provided for a single refrigerant channel switching circuit (30a, ..., 30n) as shown in FIG. 3. The plurality of motor-operated regulating valves (EV1, EV2, EV3) serve as a plurality of refrigerant channel switching valves of the air conditioner (10) having a refrigerant circuit (5) capable of performing a concurrent cooling/heating operation in which one or some of the plurality of indoor heat exchangers (41) perform cooling, while one or some other indoor heat exchangers (41) perform heating.

When the electrical component box (35) is temporarily retained on the unit case (33) at the second position, the electrical component box (35) moves to a position below the first position. Thus, as can be seen when comparing FIGS. 3 and 4, the internal wires (16) between the printed wiring board (36) and the motor-operated regulating valves (EV1, EV2, EV3) have more slack in a portion between the motor-operated regulating valves (EV1, EV2, EV3) and the wire holder (38) than in the case where the electrical component box (35) is at the first position.

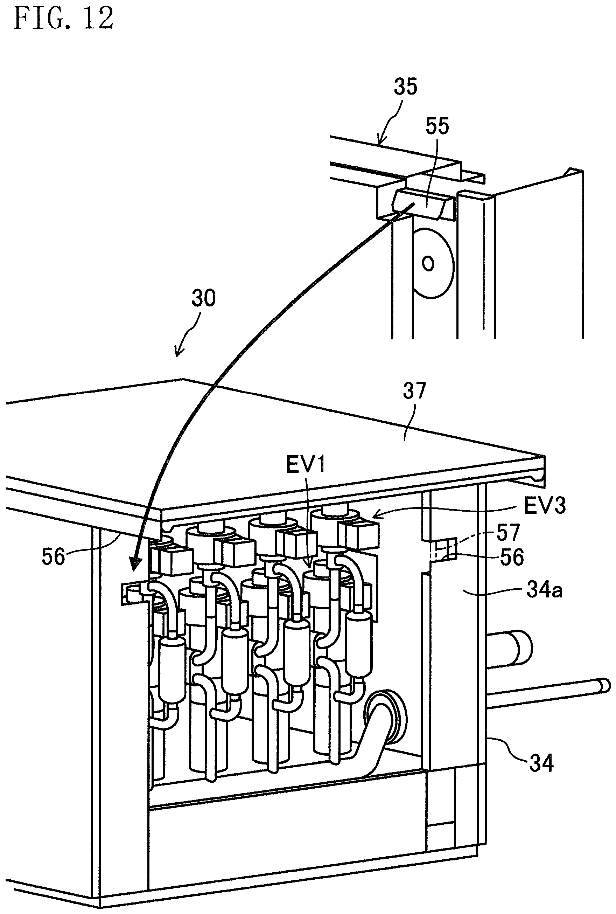

Screws are used as the fastener (53). As the temporary retaining mechanism (54), as shown in FIG. 12, a hook (55) is provided for the electrical component box (35), while a notch (56) is provided for a vertical frame (34a) of the case body (34) comprising the open face of the unit case (33) to engage with the hook (55). Instead of the notch (56), the case body (34) may have a hole (57) formed by adding a portion illustrated in a phantom line in FIG. 12 in place of the notch (56).

On the other hand, as shown in FIG. 9, the unit case (33) includes an opening (57) formed in a bottom face of the case body (35), and a drain pan (58) detachably attached to the bottom face of the case body (35) and covering the opening (57) when attached to the case body (35). In the refrigerant channel switching unit (30), condensate water may drip from the pipes. In this embodiment, such condensate water accumulates in the drain pan (58) and may be easily disposed by detaching the drain pan (58).

### - Maintenance of Refrigerant Channel Switching Unit -

A maintenance procedure of the refrigerant channel switching unit (30) will be described below.

First, during normal operation of the air conditioner (10), the electrical component box (35) and the top cover (37) are attached to the case body (34) of the refrigerant channel switching unit (30) as shown in FIGS. 3 and 5, and maintenance from the outside is not conducted.

To do the maintenance of the refrigerant channel switching unit (30), the operation of the air conditioner (10) is stopped. Then, the front plate (35a) is detached as shown in FIG. 6, and the top cover (37) is detached as shown in FIG. 7. In this state, the electrical component box (35) is kept attached to the case body (34) with screws (53) serving as the fastener.

Next, the screws (53) are removed to make the electrical component box (35) ready to be detached from the case body (34). In this state, the hook (54) catches on an upper end of the case body (34), and therefore, the electrical component box (35) does not fall down. A worker then detaches the hook (54) from the upper end of the case body (34) to separate the electrical component box (35) from the case body (34), and then hangs the hook (54) on the notch (56) for engagement. In this way, the electrical component box (35) is moved to the second position as shown in FIGS. 4 and 8.

When the electrical component box (35) is at the second position, the maintenance opening (39) is formed in an upper portion of the unit case (33). Thus, the motor-operated regulating valves (EV1, EV2, EV3), which have been covered with the unit case (33) until now, become accessible through the maintenance opening (39). This allows the worker to maintain the motor-operated regulating valves (EV1, EV2, EV3) without detaching the internal wires. Further, once the maintenance is done, the electrical component box (35) is attached to the case body (34) at the first position with the screws (53), and the top cover (37) is reattached.

### - Disposal of Condensate Water -

During the operation of the air conditioner (10), water condensates on the pipes in the refrigerant channel switching unit (30), and may drip down and accumulate in the refrigerant channel switching unit (30). According to this embodiment, such condensate water may be accumulated in the drain pan (58) shown in FIG. 9, and may easily be disposed by detaching the drain pan (58) downward from the unit case (33).

After the disposal of the condensate water, the drain pan (58) is reattached to the unit case (33) so that the operation of the air conditioner (10) may be resumed.

### - Detection of Improper Wiring -

According to this embodiment, the refrigerant channel switching unit (30) is configured as an aggregated channel switching unit housing the channel switching valves (EV1, EV2, EV3) of each of the indoor units (40) in a single unit case (33).

In the assembled refrigerant channel switching unit, the channel switching valves (EV1, EV2, EV3), the number of which corresponds to the number of the indoor units (40), are provided in a single unit case (33), such that correspondence between the channel switching valves (EV1, EV2, EV3) and connectors of the printed wiring board (36) is determined in advance. Thus, if the channel switching valves (EV1, EV2, EV3) are connected to the wrong connector, or the lead wire (16) is connected to the wrong indoor unit (40) (wires may be connected erroneously due to improper connection to the terminal block (51)), the indoor unit (40), the operation of which is supposed to be controlled during the normal operation, does not work correctly, and a different indoor unit (40) may possibly be operated.

According to this embodiment, the DIP switch (50) is provided for the refrigerant channel switching unit (30) as an operation-enforcing switch which forces the indoor fan (43) provided for each of the indoor units (40) to operate. Thus, whether the refrigerant channel switching circuit (30a, ..., 30n) and the associated indoor unit (40a, ..., 40n) are wired correctly or not may be checked in advance by the operation of the DIP switch (50).

More particularly, it is recognized that the wiring is correct if the fan which is forced to operate by the DIP switch (50) is the one associated with the target indoor unit (40), and that the wiring is incorrect if the fan which is forced to operate by the DIP switch (50) is not the one associated with the target indoor unit (40). If the wiring is incorrect, a malfunction during the normal operation may be prevented by arranging the wiring connection in the electrical component box (35) correctly.

### - Operation of Air Conditioner -

The operation of the air conditioner (10) configured as described above will be described with reference to the drawings. This air conditioner (10) performs an operation in which both of the two indoor units (40A, 40B) perform cooling or heating, or an operation in which some of the indoor units (40A, 40B) performs cooling, while the other performs heating.

### <Overall Cooling Operation>

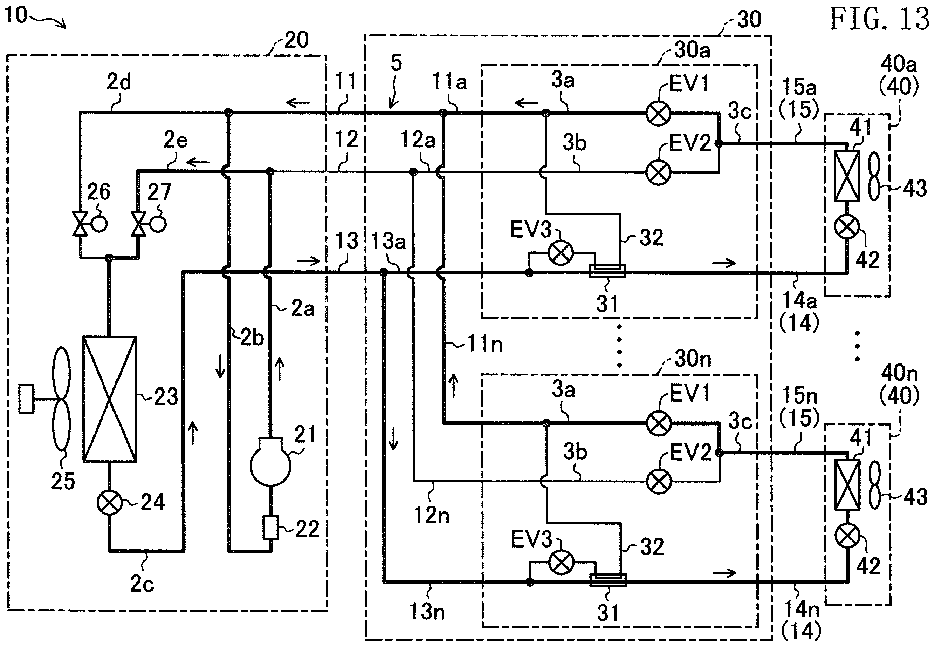

First, the operation in which each of the indoor units (40a, ..., 40n) performs cooling will be described. In this overall cooling operation, as shown in FIG. 13, in the outdoor unit (20), the first electromagnetic valve (26) is closed, the second electromagnetic valve (27) is open, and the outdoor expansion valve (24) is fully open. In each of the refrigerant channel switching circuits (30a, ..., 30n), the first motor-operated regulating valve (31) is open, and the second motor-operated regulating valve (32) is closed. In each of the indoor units (40a, ..., 40n), the degree of opening of the indoor expansion valve (42) is controlled as appropriate.

When the compressor (21) is driven in the above-described state, a high pressure gas refrigerant discharged from the compressor (21) flows into the outdoor heat exchanger (23) through the second branch pipe (2e). In the outdoor heat exchanger (23), the refrigerant exchanges heat with the air taken in through the outdoor fan (25) to condense. The condensed refrigerant passes through the principal pipe (2c) to flow out of the outdoor unit (20), and then flows into the liquid supply pipe (13). The refrigerant in the liquid supply pipe (13) is distributed among the liquid supply pipe branches (13a, ..., 13n) to flow into the indoor units (40a, ..., 40n).

In each of the indoor units (40a, ..., 40n), the refrigerant has its pressure reduced by the indoor expansion valve (42), and then flows into the indoor heat exchanger (41). In the indoor heat exchanger (41), the refrigerant exchanges heat with the air taken in through the indoor fan (43) to evaporate. Thus, the air is cooled, and cooling of the room is performed. Then, the gas refrigerant evaporated in the indoor heat exchanger (41) flows out of each indoor unit (40a, ..., 40n), passes through the gas communication pipe (15), and then flows into the associated refrigerant channel switching unit (30A, 30B).

In the refrigerant channel switching unit (30), the gas refrigerant passing through the principal pipes (3c) and first branch pipes (3a) of the refrigerant channel switching circuits (30a, ..., 30n) flows out of the unit, merges, and flows into the low pressure gas supply pipe (11). The gas refrigerant in the low pressure gas supply pipe (11) flows into the outdoor unit (20), and passes through the suction pipe (2b) to return to the compressor (21). The refrigerant is circulated repeatedly in this way.

### <Overall Heating Operation>

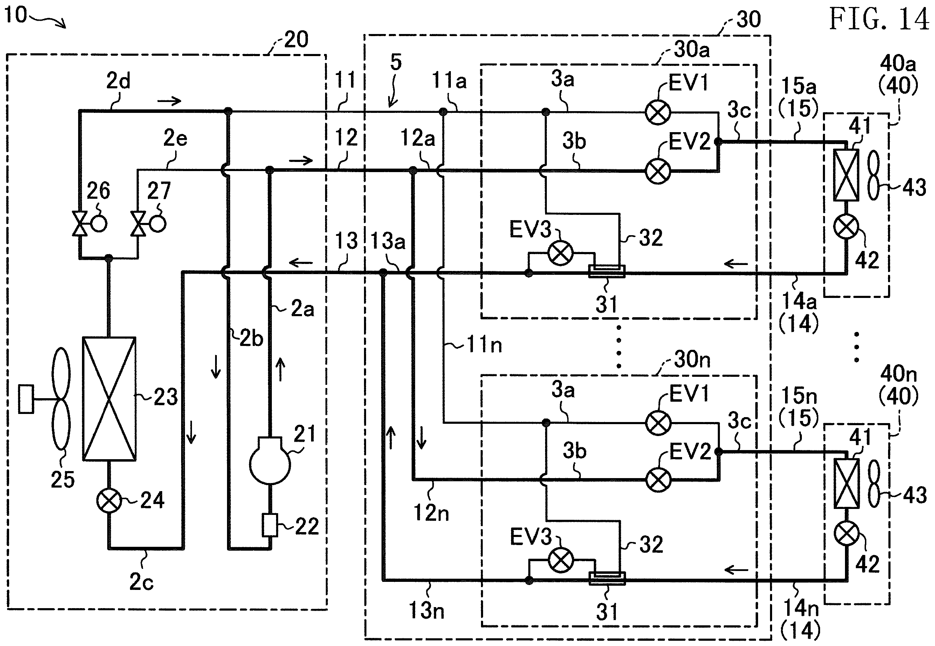

Next, an operation in which each of the indoor units (40a, ..., 40n) performs heating will be described. During this heating operation, as shown in FIG. 14, in the outdoor unit (20), the first electromagnetic valve (26) is open, the second electromagnetic valve (27) is closed, and the degree of opening of the outdoor expansion valve (24) is controlled as appropriate. In each of the refrigerant channel switching circuits (30a, ..., 30n), the first motor-operated regulating valve (31) is closed, and the second motor-operated regulating valve (32) is open. The indoor expansion valves (42) of the indoor units (40a, ..., 40n) are fully open.

When the compressor (21) is driven in the above-described state, a high pressure gas refrigerant discharged from the compressor (21) flows out of the outdoor unit (20), and into the high/low pressure gas supply pipe (12). The refrigerant in the high/low pressure gas supply pipe (12) is distributed among the high/low pressure gas supply pipe branches (12a, ..., 12n), and flows into the refrigerant channel switching circuits (30a, ..., 30n). Having flowed into the associated refrigerant channel switching circuit (30a, ..., 30n), the refrigerant passes through the second branch pipe (3b) and the principal pipe (3c), and then flows into the gas communication pipe (15) and the associated indoor unit (40a, ..., 40n).

In each of the indoor units (40a, ..., 40n), the refrigerant exchanges heat with the air to condense. Thus, the air is heated, and heating of the room is performed. The refrigerant condensed in the indoor units (40a, ..., 40n) merges and flows into the liquid supply pipe (13). The refrigerant in the liquid supply pipe (13) flows into the outdoor unit (20), and passes through the principal pipe (2c). The refrigerant in the principal pipe (2c) has its pressure reduced by the outdoor expansion valve (24), and then flows into the outdoor heat exchanger (23). In the outdoor heat exchanger (23), the refrigerant exchanges heat with the air and evaporates. Having evaporated, the gas refrigerant passes through the first branch pipe (2d) and the suction pipe (2b) to return to the compressor (21). The refrigerant is circulated repeatedly in this way.

### <Concurrent Cooling/Heating Operation>

An operation in which one or some of the indoor units (40a ··· 40n) perform the cooling, while one or some other indoor units (40a, ..., 40n) performs heating will be described below. First, the case will be described where only the n^{th} indoor unit (40n) is switched to the heating operation during the overall cooling operation described above. In the below description, the difference between the overall cooling operation and the concurrent cooling/heating operation will be emphasized.

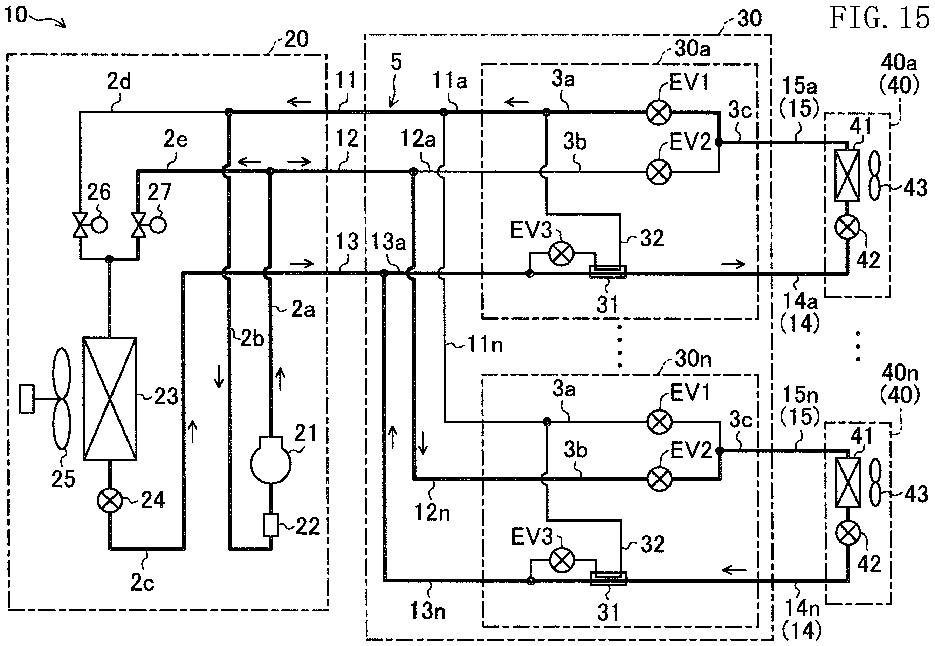

In the concurrent cooling/heating operation, the first motor-operated regulating valve (31) of the n^{th} refrigerant channel switching circuit (30n) is switched to "close" in the state of the overall cooling operation described above, while the second motor-operated regulating valve (32) is switched to "open," as shown in FIG. 15. Further, the indoor expansion valve (42) of the n^{th} indoor unit (40n) is fully open. Then, part of a high pressure gas refrigerant discharged from the compressor (21) flows into the second branch pipe (2e), and the rest of the refrigerant flows into the high/low pressure gas supply pipe (12). Having flowed into the high/low pressure gas supply pipe (12), the refrigerant passes through the high/low pressure gas supply pipe branch (12n) to flow into the second branch pipe (3b) of the n^{th} refrigerant channel switching circuit (30n). The refrigerant in the second branch pipe (3b) passes through the principal pipe (3c) and the gas communication pipe (15n) to flow into the indoor heat exchanger (41) of the n^{th} indoor unit (40n).

In the indoor heat exchanger (41) of the n^{th} indoor unit (40n), the refrigerant exchanges heat with the air and condenses. Thus, the air is heated, and heating of the room is performed. The refrigerant condensed in the n^{th} indoor unit (40n) passes through the liquid supply pipe branch (13n) to flow into the liquid supply pipe (13), and merges with the refrigerant from the outdoor unit (20). The merged refrigerant flows into the first indoor unit (40a) and has its pressure reduced by the indoor expansion valve (42), and then evaporates in the indoor heat exchanger (41). Thus, the room is cooled. The evaporated refrigerant passes through the low pressure gas supply pipe (11) to return to the outdoor unit (20), and is sucked into the compressor (21).

Next, the case where only the n^{th} indoor unit (40n) is switched to the cooling operation during the overall heating operation will be described. Note that the difference between this operation and the overall heating operation will be emphasized.

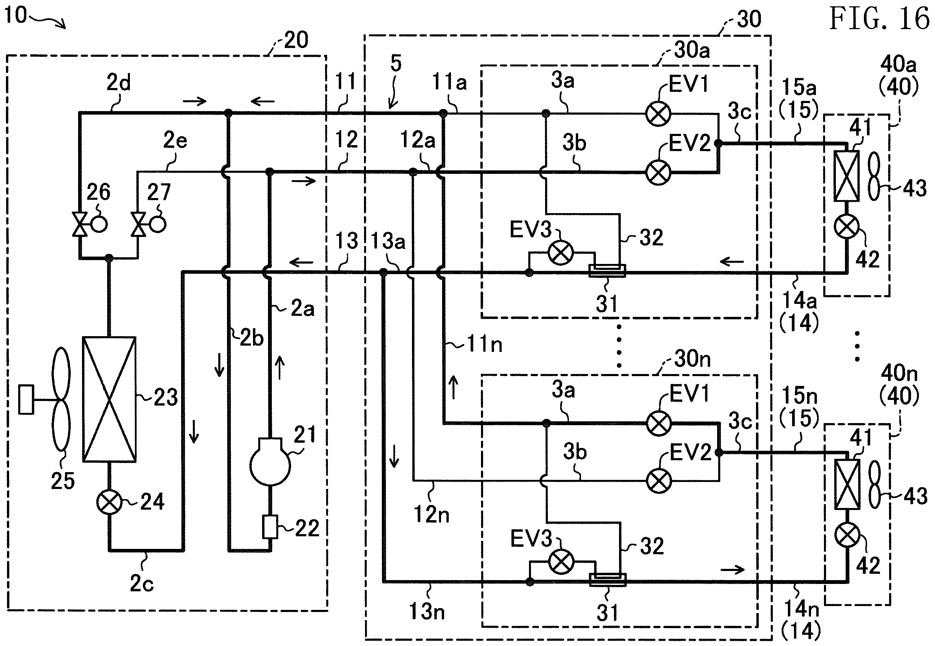

In the concurrent cooling/heating operation, as shown in FIG. 16, the first motor-operated regulating valve (31) of the n^{th} refrigerant channel switching circuit (30n) is switched to "open" in the state of the overall heating operation, while the second motor-operated regulating valve (32) is switched to "close." Further, the degree of opening of the indoor expansion valve (42) of the n^{th} indoor unit (40n) is controlled suitably. Then, the total amount of the refrigerant which has flowed from the compressor (21) to the high/low pressure gas supply pipe (12) is distributed among the refrigerant channel switching circuits (30a, ..., 30n-1) except for the n^{th} refrigerant channel switching circuit (30n). Having passed through the refrigerant channel switching circuits (30a, ..., 30n-1), the refrigerant enters the indoor units (40a, ..., 40n-1) except for the n^{th} indoor unit (40n), and condenses in the indoor heat exchanger (41). Thus, the room is heated.

Part of the condensed refrigerant passes through the liquid supply pipe branch (13n) to flow into the n^{th} indoor unit (40n), and the rest of the refrigerant flows into the outdoor unit (20). In the n^{th} indoor unit (40n), the refrigerant has its pressure reduced by the indoor expansion valve (42), and evaporates in the indoor heat exchanger (41). Thus, the n^{th} indoor unit (40n) performs cooling. The gas refrigerant evaporated in the n^{th} indoor unit (40n) passes through the gas communication pipe (15n) to flow into the n^{th} refrigerant channel switching circuit (30n). Having passed through the n^{th} refrigerant channel switching circuit (30n), the refrigerant passes through the low pressure gas supply pipe branch (11n) to flow into the low pressure gas supply pipe (11). The refrigerant in the low pressure gas supply pipe (11) merges with the refrigerant from the outdoor heat exchanger (23) to flow into the suction pipe (2b). The refrigerant merged in the suction pipe (2b) is sucked again into the compressor (21).

### - Advantages of First Embodiment -

According to this embodiment, the maintenance opening (39) is formed in a part of one face of the unit case (33) when the electrical component box (35) is attached to the case body (34) at the second position. Thus, a worker may maintain the plurality of channel switching valves (EV1, EV2, EV3) through the maintenance opening (39). Further, since the electrical component box (35) at the second position is temporarily retained on the case body (34) by the temporary retaining mechanism (54), there is no need to fasten the electrical component box (35) with a fastener (53) or any other member, and the electrical component box (35) may be positioned easily. In addition, the electrical component box (35) may be easily moved to the second position, where the maintenance opening (39) is formed, without removing the internal wires (16) connected to the channel switching valves (EV1, EV2, EV3) and the electrical component (36) because the electrical component box (35) does not have to be detached from the case body (34).

In particular, according to this embodiment, the internal wires (16) connected to the electrical component (36) in the electrical component box (35) and the channel switching valves (EV1, EV2, EV3) have a slack portion between the channel switching valves (EV1, EV2, EV3) and the wire holder (38) as shown in FIG. 3. Thus, when the electrical component box (35) is at the second position, the portion of the internal wires may be still loose as shown in FIG. 4. That is, when the electrical component box (35) is moved from the first position to the second position below the first position, the wire holder (38) holding the internal wires (16) at an upper position also moves downward. Therefore, the internal wires (16) have more slack than in the case where the electrical component box (35) is at the first position. As a result, the electrical component box (35) may be easily moved from the first to the second position, or from the second to first position, without detaching the internal wires (16) between the electrical component box (35) and the channel switching valves (EV1, EV2, EV3). This may facilitate the maintenance.

Moreover, according to this embodiment, the electrical component box (35) is temporarily retained on the case body (34) at the second position below the first position. Thus, the maintenance opening (39) is formed in an upper portion of the unit case (33), and the position of the maintenance opening (39) corresponds to the level of the coils (60) of the channel switching valves (EV1, EV2, EV3) arranged in an upper region in the unit case (33). This may facilitate the maintenance of the channel switching valves (EV1, EV2, EV3).

In addition, according to this embodiment, the hook (55) provided for the electrical component box (35) may be hanged on, and engaged with, the hole or notch (56) formed in a member of the unit case (33). Thus, the electrical component box (35) may be easily retained temporarily on the unit case (33) at the second position. This may facilitate the formation of the maintenance opening (39) in the unit case (33), and may prevent complicated maintenance.

On top of that, according to this embodiment, condensate water may be easily disposed by removing the drain pan (58) from the bottom face of the unit case (33). According to this embodiment, in particular, the coils and the drain pan (58) are arranged at different positions, i.e., in an upper region and a lower region, respectively. Thus, they may be maintained without any interference.

### «Other Embodiments»

The above-described embodiment may be modified in the following manner.

For example, the refrigerant channel switching unit (30) according to the above-described embodiment houses the motor-operated regulating valves (EV1, EV2, EV3) for the four sets of refrigerant channel switching circuits (30a, ..., 30n). However, the number of the motor-operated regulating valves (EV1, EV2, EV3) for the refrigerant channel switching circuits (30a, ..., 30n) may as well be one, two, three, or five or more.

Further, the refrigerant channel switching unit (30) according to the above-described embodiment is a hanging unit. However, the refrigerant channel switching unit may as well be of a type other than the hanging type, and in an example, which is not part of the claimed invention, the second position of the electrical component box (35) does not necessarily have to be below the first position. That is, coils of the channel switching valves such as the motor-operated regulating valves (EV1, EV2, EV3) and the electromagnetic on-off valves may be disposed at any position as long as the maintenance opening is formed when the electrical component box (35) is at the second position.

The embodiments described above are merely exemplary ones in nature, and do not intend to limit the scope, or application or uses of the present invention.

### INDUSTRIAL APPLICABILITY

As can be seen from the foregoing, the present invention is useful for a refrigerant channel switching unit including a unit case housing a channel switching valve for switching channels of a refrigerant in a refrigerant circuit of an air conditioner, and an electrical component box attached to the case body.

### DESCRIPTION OF REFERENCE CHARACTERS

- 5: Refrigerant Circuit
- 10: Air Conditioner
- 16: Internal Wire
- 30: Refrigerant Channel Switching Unit
- 33: Unit Case
- 34: Case Body
- 35: Electrical Component Box
- 36: Electrical Component
- 38: Wire Holder
- 39: Maintenance Opening
- 53: Fastener
- 54: Temporary Retaining Mechanism
- 55: Hook
- 56: Notch
- 57: Drain Opening
- 58: Drain Pan
- 60: Coil
- EV1: Channel Switching Valve
- EV2: Channel Switching Valve
- EV3: Channel Switching Valve

## Claims

1. A refrigerant channel switching unit, comprising:
a channel switching valve (EV1, EV2, EV3) configured to switch, by electric control, channels of a refrigerant in a refrigerant circuit (5) of an air conditioner (10); and a unit case (33) housing the channel switching valve (EV1, EV2, EV3),
the unit case (33) including a case body (34) having one open face, and an electrical component box (35) being detachably attached to the one open face of the case body (34) and housing an electrical component (36) controlling the channel switching valve (EV1, EV2, EV3), wherein
the electrical component box (35) is attachable to the case body (34) at a first position, where the electrical component box (35) blocks the one open face of the case body (34) entirely, and a second position, where a maintenance opening (39) is formed in a part of the one open face of the unit case (33), and
the refrigerant channel switching unit further comprises a fastener (53) for attaching the electrical component box (35) to the case body (34) at the first position, and a temporary retaining mechanism (54) for temporarily retaining the electrical component box (35) at the second position,
the second position of the electrical component box (35) is below the first position, and
**characterized in that**
the electrical component box (35) is provided with a wire holder (38) holding, an internal wire (16) connected to the electrical component (36) in the electrical component box (35) and the channel switching valve (EV1, EV2, EV3), and that the wire holder (38) is provided to hold the internal wire (16) at a position above the channel switching valve (EV1, EV2, EV3) when the electrical component box (35) is attached to the case body (34) at the first position.

2. The refrigerant channel switching unit of claim 1, wherein
the channel switching valve (EV1, EV2, EV3) is a motor-operated regulating valve (EV1, EV2, EV3) or electromagnetic on-off valve having a coil (60), and
the coil (60) is arranged in an upper portion in the unit case (33) to correspond to the maintenance opening (39) formed in an upper portion of the unit case (33) when the electrical component box (35) is temporarily retained on the case body (34) at the second position.

3. The refrigerant channel switching unit of claim 2, wherein
the internal wire (16) is held by the wire holder (38) such that a portion of the internal wire (16) between the channel switching valve (EV1, EV2, EV3) and the wire holder (38) has an actual length longer than a direct distance between the channel switching valve (EV1, EV2, EV3) and the wire holder (38), and is thus slack.

4. The refrigerant channel switching unit of any one of claims 1-3, wherein
the temporary retaining mechanism (54) includes a hook (55) provided for the electrical component box (35), and a hole or notch (56) formed in a member comprising the one open face of the unit case (33) to engage with the hook (55).

5. The refrigerant channel switching unit of any one of claims 1-4, wherein
the unit case (33) has a drain opening (57) formed in a bottom face of the case body (34), and a drain pan (58) detachably attached to the bottom face of the case body (34) and covering the drain opening (57) when attached to the case body (34).

6. The refrigerant channel switching unit of any one of claims 1-5, wherein
the unit case (33) houses a plurality of channel switching valves (EV1, EV2, EV3), and
the plurality of channel switching valves (EV1, EV2, EV3) is a plurality of refrigerant channel switching valves (EV1, EV2, EV3) of an air conditioner (10) including a refrigerant circuit (5) capable of performing a concurrent cooling/heating operation, i.e., concurrently performing a cooling operation with one or some of a plurality of indoor heat exchangers and a heating operation with one or some other indoor heat exchangers.

## Patentansprüche

1. Kältemittelkanalumschalteinheit, umfassend:
ein Kanalumschaltventil (EV1, EV2, EV3), das konfiguriert ist, um durch elektrische Steuerung Kanäle eines Kältemittels in einem Kältemittelkreislauf (5) einer Klimaanlage (10) umzuschalten; und ein Einheitsgehäuse (33), das das Kanalumschaltventil (EV1, EV2, EV3) aufnimmt,
wobei das Einheitsgehäuse (33) einen Gehäusekörper (34), der eine offene Seite aufweist, und einen Kasten elektrischer Komponenten (35) einschließt, der lösbar an der einen offenen Seite des Gehäusekörpers (34) befestigt ist und eine elektrische Komponente (36) aufnimmt, die das Kanalumschaltventil (EV1, EV2, EV3) steuert, wobei
der Kasten elektrischer Komponenten (35) an dem Gehäusekörper (34) an einer ersten Position, an der der Kasten elektrischer Komponenten (35) die eine offene Seite des Gehäusekörpers (34) vollständig blockiert, und einer zweiten Position, an der eine Wartungsöffnung (39) in einem Teil der einen offenen Seite des Einheitsgehäuses (33) gebildet ist, befestigt werden kann, und
die Kältemittelkanalumschalteinheit weiter ein Fixiermittel (53) zum Befestigen des Kastens elektrischer Komponenten (35) an dem Gehäusekörper (34) an der ersten Position und einen temporären Rückhaltemechanismus (54) zum temporären Zurückhalten des Kastens elektrischer Komponenten (35) an der zweiten Position umfasst,
die zweite Position des Kastens elektrischer Komponenten (35) unter der ersten Position liegt, und
**dadurch gekennzeichnet, dass**
der Kasten elektrischer Komponenten (35) mit einem Drahthalter (38) bereitgestellt ist, der einen inneren Draht (16) hält, der mit der elektrischen Komponente (36) im Kasten elektrischer Komponenten (35) und dem Kanalumschaltventil (EV1, EV2, EV3) verbunden ist, und dass der Drahthalter (38) bereitgestellt ist, um den inneren Draht (16) an einer Position oberhalb des Kanalumschaltventils (EV1, EV2, EV3) zu halten, wenn der Kasten elektrischer Komponenten (35) am Gehäusekörper (34) an der ersten Position befestigt ist.

2. Kältemittelkanalumschalteinheit nach Anspruch 1, wobei
das Kanalumschaltventil (EV1, EV2, EV3) ein motorbetriebenes Regelventil (EV1, EV2, EV3) oder elektromagnetisches An-Aus-Ventil ist, das eine Spule (60) aufweist, und
die Spule (60) in einem oberen Abschnitt im Einheitsgehäuse (33) angeordnet ist, um der Wartungsöffnung (39) zu entsprechen, die in einem oberen Abschnitt des Einheitsgehäuses (33) gebildet ist, wenn der Kasten elektrischer Komponenten (35) temporär auf dem Gehäusekörper (34) an der zweiten Position zurückgehalten wird.

3. Kältemittelkanalumschalteinheit nach Anspruch 2, wobei
der innere Draht (16) vom Drahthalter (38) gehalten wird, sodass ein Abschnitt des inneren Drahtes (16) zwischen dem Kanalumschaltventil (EV1, EV2, EV3) und dem Drahthalter (38) eine tatsächliche Länge aufweist, die länger als ein direkter Abstand zwischen dem Kanalumschaltventil (EV1, EV2, EV3) und dem Drahthalter (38) ist, und somit lose ist.

4. Kältemittelkanalumschalteinheit nach einem der Ansprüche 1-3, wobei
der temporäre Rückhaltemechanismus (54) einen Haken (55), der für den Kasten elektrischer Komponenten (35) bereitgestellt ist, und ein Loch oder eine Kerbe (56) einschließt, das/die in einem Element gebildet ist, das die eine offene Seite des Einheitsgehäuses (33) umfasst, um in den Haken (55) einzugreifen.

5. Kältemittelkanalumschalteinheit nach einem der Ansprüche 1-4, wobei
das Einheitsgehäuse (33) eine Ablauföffnung (57), die in einer unteren Seite des Gehäusekörpers (34) gebildet ist, und eine Ablaufwanne (58) aufweist, die lösbar an der unteren Seite des Gehäusekörpers (34) befestigt ist und die Ablauföffnung (57) abdeckt, wenn sie am Gehäusekörper (34) befestigt ist.

6. Kältemittelkanalumschalteinheit nach einem der Ansprüche 1-5, wobei
das Einheitsgehäuse (33) eine Vielzahl von Kanalumschaltventilen (EV1, EV2, EV3) aufnimmt, und
die Vielzahl von Kanalumschaltventilen (EV1, EV2, EV3) eine Vielzahl von Kältemittelkanalumschaltventilen (EV1, EV2, EV3) einer Klimaanlage (10) sind, die einen Kältemittelkreislauf (5) einschließen, der imstande ist, einen gleichzeitigen Kühl-/Heizbetrieb durchzuführen, d. h. ein gleichzeitiges Durchführen eines Kühlbetriebs mit einem oder einigen von einer Vielzahl von Innenraum-Wärmetauschern und eines Heizbetriebs mit einem oder einigen anderen Innenraum-Wärmetauschern.

## Revendications

1. Unité de commutation de canal de réfrigérant, comprenant :
une soupape de commutation de canal (EV1, EV2, EV3) configurée pour commuter, par commande électrique, des canaux d'un réfrigérant dans un circuit de réfrigérant (5) d'un climatiseur (10) ; et un boîtier unitaire (33) logeant la soupape de commutation de canal (EV1, EV2, EV3),
le boîtier unitaire (33) comportant un corps de boîtier (34) possédant une face ouverte, et une boîte à composant électrique (35) fixée de manière amovible à ladite une face ouverte du corps de boîtier (34) et logeant un composant électrique (36) qui commande la soupape de commutation de canal (EV1, EV2, EV3), dans laquelle
la boîte à composant électrique (35) peut être fixée au corps de boîtier (34) dans une première position, où la boîte à composant électrique (35) bloque entièrement ladite une face ouverte du corps de boîtier (34), et dans une seconde position, où une ouverture de maintenance (39) est formée dans une partie de ladite une face ouverte du boîtier unitaire (33), et
l'unité de commutation de canal de réfrigérant comprend en outre une attache (53) permettant de fixer la boîte à composant électrique (35) au corps de boîtier (34) dans la première position, et un mécanisme de retenue temporaire (54) permettant de retenir temporairement la boîte à composant électrique (35) dans la seconde position,
la seconde position de la boîte à composant électrique (35) se trouve sous la première position, et
**caractérisée en ce que**
la boîte à composant électrique (35) est pourvue d'un porte-fil (38) tenant un fil interne (16) relié au composant électrique (36) de la boîte à composant électrique (35) et à la soupape de commutation de canal (EV1, EV2, EV3), et **en ce que** le porte-fil (38) est prévu pour tenir le fil interne (16) dans une position située au-dessus de la soupape de commutation de canal (EV1, EV2, EV3) lorsque la boîte à composant électrique (35) est fixée au corps de boîtier (34) dans la première position.

2. Unité de commutation de canal de réfrigérant selon la revendication 1, dans laquelle
la soupape de commutation de canal (EV1, EV2, EV3) est une soupape de régulation à moteur (EV1, EV2, EV3) ou une soupape tout ou rien électromagnétique dotée d'une bobine (60), et
la bobine (60) est agencée dans une partie supérieure du boîtier unitaire (33) de manière à correspondre à l'ouverture de maintenance (39) formée dans une partie supérieure du boîtier unitaire (33) lorsque la boîte à composant électrique (35) est retenue temporairement sur le corps de boîtier (34) dans la seconde position.

3. Unité de commutation de canal de réfrigérant selon la revendication 2, dans laquelle
le fil interne (16) est tenu par le porte-fil (38) de sorte qu'une partie du fil interne (16) entre la soupape de commutation de canal (EV1, EV2, EV3) et le porte-fil (38) possède une longueur réelle supérieure à une distance directe entre la soupape de commutation de canal (EV1, EV2, EV3) et le porte-fil (38), et est de ce fait relâchée.

4. Unité de commutation de canal de réfrigérant selon l'une quelconque des revendications 1 à 3, dans laquelle
le mécanisme de retenue temporaire (54) comporte un crochet (55) prévu pour la boîte à composant électrique (35), et un trou ou une encoche (56) formé(e) dans un élément comprenant ladite une face ouverte du boîtier unitaire (33) pour venir en prise avec le crochet (55).

5. Unité de commutation de canal de réfrigérant selon l'une quelconque des revendications 1 à 4, dans laquelle
le boîtier unitaire (33) possède une ouverture de vidange (57) formée dans une face inférieure du corps de boîtier (34), et un bac de vidange (58) fixé de manière amovible à la face inférieure du corps de boîtier (34) et couvrant l'ouverture de vidange (57) lorsqu'il est fixé au corps de boîtier (34).

6. Unité de commutation de canal de réfrigérant selon l'une quelconque des revendications 1 à 5, dans laquelle
le boîtier unitaire (33) loge une pluralité de soupapes de commutation de canal (EV1, EV2, EV3), et
la pluralité de soupapes de commutation de canal (EV1, EV2, EV3) est une pluralité de soupapes de commutation de canal de réfrigérant (EV1, EV2, EV3) d'un climatiseur (10) comportant un circuit de réfrigérant (5) capable de réaliser une opération simultanée de refroidissement et de chauffage, c'est-à-dire de réaliser simultanément une opération de refroidissement avec un ou quelques-uns d'une pluralité d'échangeurs de chaleur intérieurs et une opération de chauffage avec un autre ou quelques autres échangeurs de chaleur intérieurs.
